(19) Europäisches Patentamt
European Patent Office
Office européen des brevets

(11) **EP 2 673 476 B1**

(12) **FASCICULE DE BREVET EUROPEEN**

(45) Date de publication et mention
de la délivrance du brevet:
**05.04.2017 Bulletin 2017/14**

(21) Numéro de dépôt: **12707852.5**

(22) Date de dépôt: **02.02.2012**

(51) Int Cl.:
***F01D 11/24*** *(2006.01)*

(86) Numéro de dépôt international:
**PCT/FR2012/050232**

(87) Numéro de publication internationale:
**WO 2012/107670 (16.08.2012 Gazette 2012/33)**

(54) **PROCEDE DE PILOTAGE DE JEU EN SOMMET D'AUBES DE ROTOR DE TURBINE**

VERFAHREN ZUR REGELUNG DES ABSTANDS VON SCHAUFELSPITZEN EINES TURBINENROTORS

METHOD FOR CONTROLLING THE CLEARANCE AT THE TIPS OF THE BLADES OF A TURBINE ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2011 FR 1151145**

(43) Date de publication de la demande:
**18.12.2013 Bulletin 2013/51**

(73) Titulaire: **SNECMA**
**75015 Paris (FR)**

(72) Inventeurs:
• **JAVELOT, Christophe**
**F-94400 Vitry Sur Seine (FR)**

• **BONNEAU, Damien**
**F-77000 Melun (FR)**
• **GAULLY, Bruno, Robert**
**F-91630 Marolles En Hurepoix (FR)**
• **OLIVIER, Amaury**
**F-92100 Boulogne-billancourt (FR)**

(74) Mandataire: **David, Alain et al**
**Cabinet Beau de Loménie**
**158, rue de l'Université**
**75340 Paris Cedex 07 (FR)**

(56) Documents cités:
GB-A- 2 417 762       US-A- 4 710 095
US-A1- 2008 069 683   US-B1- 6 487 491
US-B2- 7 584 618

**Description**

Arrière-plan de l'invention

La présente invention se rapporte au domaine général des turbomachines pour moteurs aéronautiques à turbine à gaz. Elle vise plus précisément le pilotage du jeu entre, d'une part, les sommets d'aubes mobiles d'un rotor de turbine et, d'autre part, un anneau de turbine d'un carter externe entourant les aubes.

Le jeu existant entre le sommet des aubes d'une turbine et l'anneau qui les entoure est dépendant des différences de variations dimensionnelles entre les parties tournantes (disque et aubes formant le rotor de turbine) et les parties fixes (carter externe dont l'anneau de turbine qu'il comprend). Ces variations dimensionnelles sont à la fois d'origine thermique (liées aux variations de température des aubes, du disque et du carter) et d'origine mécanique (notamment liées à l'effet de la force de centrifuge s'exerçant sur le rotor de turbine).

Pour augmenter la performance d'une turbine, il est souhaitable de minimiser le jeu autant que possible. D'autre part, lors d'une augmentation de régime, par exemple lors du passage d'un régime de ralenti au sol à un régime de décollage dans une turbomachine pour moteur aéronautique, la force de centrifuge s'exerçant sur le rotor de turbine tend à rapprocher les sommets d'aubes de l'anneau de turbine avant que l'anneau de turbine n'aie eu le temps de se dilater sous l'effet de l'augmentation de température liée à l'augmentation de régime. Il existe donc un risque de contact en ce point de fonctionnement appelé point de pincement.

Il est connu de recourir à des systèmes de pilotage actif pour piloter le jeu de sommet d'aubes d'une turbine de turbomachine. Ces systèmes fonctionnent généralement en dirigeant sur la surface externe de l'anneau de turbine de l'air prélevé par exemple au niveau d'un compresseur et/ou de la soufflante de la turbomachine. De l'air frais envoyé sur la surface externe de l'anneau de turbine a pour effet de refroidir ce dernier et ainsi de limiter sa dilatation thermique. Le jeu est donc minimisé. Inversement, de l'air chaud favorise la dilatation thermique de l'anneau de turbine, ce qui augmente le jeu et permet par exemple d'éviter un contact au point de pincement précité.

Un tel pilotage actif est contrôlé par exemple par le système de régulation pleine autorité (ou FADEC) de la turbomachine. Plus précisément, le débit et/ou la température de l'air dirigé sur l'anneau de turbine est commandé en fonction d'une consigne de jeu et d'une estimation du jeu de sommet d'aubes réel. En effet, aucun capteur ne mesure directement le jeu de sommet d'aubes, qui doit donc être estimé.

Comme expliqué précédemment, le jeu de sommet d'aubes dépend notamment de l'état thermique de la turbomachine. Il est donc connu de déterminer une estimation du jeu de sommet d'aubes, au démarrage d'une turbomachine, en fonction de l'état thermique de la turbomachine.

Dans certains moteurs, l'état thermique au démarrage est estimé en fonction du temps d'arrêt du moteur. L'enregistrement de l'heure d'arrêt du moteur est toutefois une opération complexe.

Dans certains moteurs, la turbine est équipée d'un capteur de température mesurant la température du carter, appelée $T_{case}$. Il s'agit typiquement de thermocouples de masse (c'est-à-dire mesurant la température de la matière et non de l'air ambiant) de type K (chromel-alumel) avec ressort pour compenser les dilatations différentielles et les vibrations. Un tel capteur présente toutefois un coût, une masse et un encombrement élevés. Son installation au niveau du carter, avec son harnais, est complexe. De plus, une perte du contact entre le carter et le thermocouple peut fausser la mesure de la température.

Des systèmes de pilotage actif pour piloter le jeu de sommet d'aubes d'une turbine de turbomachine selon l'art antérieur sont connus dans les documents US 6487491 et US 7584618.

Objet et résumé de l'invention

La présente invention a donc pour but principal de pallier de tels inconvénients.

Ce but est atteint grâce à un procédé de pilotage d'un jeu entre, d'une part, des sommets d'aubes d'un rotor de turbine d'un moteur d'avion à turbine à gaz et, d'autre part, un anneau de turbine d'un carter entourant les aubes, selon la revendication 1
le procédé consistant à commander un débit et/ou une température d'air dirigé vers le carter en fonction notamment d'une estimation dudit jeu, caractérisé en ce que ladite estimation dudit jeu est déterminée, lors du démarrage du moteur d'avion, en fonction d'une température mesurée par un capteur de température incluant un élément sensible agencé dans un espace libre du moteur d'avion.

Si, au démarrage du moteur, aucun flux d'air ne traverse l'espace libre, alors la température mesurée par l'élément sensible du capteur de température est la température de son environnement, mesurée par rayonnement. L'évolution de cette température pendant l'arrêt du moteur au sol peut être reproductible et modélisable.

Ainsi, connaissant la température mesurée lors du démarrage du moteur, il est possible de déterminer la durée d'arrêt du moteur sans nécessiter l'enregistrement de l'heure d'arrêt du moteur. On évite donc une opération d'enregistrement complexe. De plus, l'état thermique du moteur au démarrage peut être déterminé sans nécessiter de capteur de température de type thermocouple de masse.

De manière plus générale, l'invention permet de déterminer une estimation du jeu lors du démarrage du moteur, en bénéficiant de la reproductibilité de l'évolution de la température pendant l'arrêt du moteur au sol, sans nécessiter l'enregistrement de l'heure d'arrêt du moteur ni de capteur de température de type thermocouple de masse.

Au contraire, dans un mode de réalisation, le capteur de température est un capteur destiné à fonctionner par aspiration après le démarrage du moteur d'avion, afin de mesurer la température d'un flux d'air dans une veine du moteur d'avion.

Ainsi, le capteur de température peut être mutualisé entre plusieurs fonctions.

Selon un mode de réalisation, le procédé de pilotage comprend :

- une étape de détermination d'une durée d'arrêt du moteur d'avion en fonction de ladite température et d'un modèle de l'évolution de ladite température en fonction du temps lors du l'arrêt du moteur d'avion au sol,
- une étape de détermination d'un état thermique du moteur d'avion lors du démarrage, en fonction de la durée d'arrêt déterminée, et
- une étape de détermination de ladite estimation dudit jeu en fonction de l'état thermique déterminé.

La détermination d'un état thermique du moteur d'avion lors du démarrage en fonction d'une durée d'arrêt, et la détermination d'une estimation du jeu en fonction de l'état thermique déterminé, sont des opérations connues et maîtrisées. L'étape de détermination d'une durée d'arrêt du moteur d'avion en fonction de ladite température et d'un modèle de l'évolution de ladite température en fonction du temps lors du l'arrêt du moteur d'avion au sol permet donc de bénéficier de ces opérations connues.

Corrélativement, l'invention propose une unité de commande , selon la revendication 4, destinée au pilotage d'un jeu entre, d'une part, des sommets d'aubes d'un rotor de turbine d'un moteur d'avion à turbine à gaz et, d'autre part, un anneau de turbine d'un carter entourant les aubes, ladite unité de commande comprenant un module de commande d'un débit et/ou d'une température d'air dirigé vers le carter en fonction notamment d'une estimation dudit jeu, caractérisé en ce que qu'elle comprend un module d'estimation apte à déterminer ladite estimation dudit jeu, lors du démarrage du moteur d'avion, en fonction d'une température mesurée par un capteur de température incluant un élément sensible agencé dans un espace libre du moteur d'avion.

L'invention propose aussi un moteur d'avion comprenant unité de commande conforme à l'invention et un capteur de température incluant un élément sensible agencé dans un espace libre du moteur d'avion, ledit capteur de température étant destiné à fonctionner par aspiration après le démarrage du moteur d'avion, afin de mesurer la température d'un flux d'air dans une veine du moteur d'avion, le module d'estimation de l'unité de commande étant apte à déterminer ladite estimation dudit jeu en fonction de la température mesurée par ledit capteur de température.

Les avantages et caractéristiques discutées précédemment en rapport au procédé de pilotage s'applique également à l'unité de commande et au moteur conformes à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue schématique et en coupe longitudinale d'une partie d'un moteur d'avion à turbine à gaz selon un mode de réalisation de l'invention ;
- la figure 2 est une vue agrandie du moteur de la figure 1 montrant notamment la turbine haute-pression de celui-ci ;
- la figure 3 représente un capteur de température du moteur de la figure 1 ;
- la figure 4 illustre, sous forme de modules fonctionnels, certaines étapes d'un procédé de pilotage selon un mode de réalisation de l'invention ; et
- la figure 5 illustre, sous forme d'un module fonctionnel, une étape d'un procédé de pilotage selon un autre mode de réalisation de l'invention.

Description détaillée de modes de réalisation

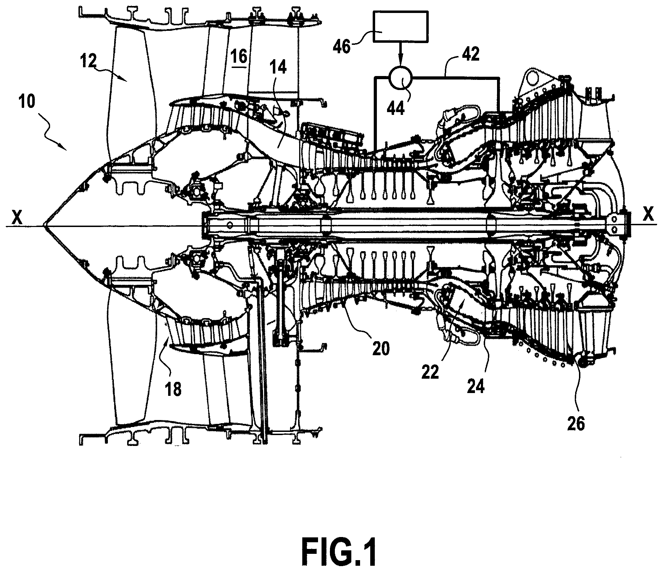

La **figure 1** représente de façon schématique un turboréacteur 10 du type à double flux et double corps auquel s'applique en particulier l'invention. Bien entendu, l'invention n'est pas limitée à ce type particulier de moteur d'avion à turbine à gaz.

De façon bien connue, le turboréacteur 10 d'axe longitudinal X-X comprend notamment une soufflante 12 qui délivre un flux d'air dans une veine d'écoulement de flux primaire 14 et dans une veine d'écoulement de flux secondaire 16 coaxiale à la veine de flux primaire. D'amont en aval dans le sens d'écoulement du flux gazeux le traversant, la veine d'écoulement de flux primaire 14 comprend un compresseur basse-pression 18, un compresseur haute-pression 20, une chambre de combustion 22, une turbine haute-pression 24 et une turbine basse-pression 26.

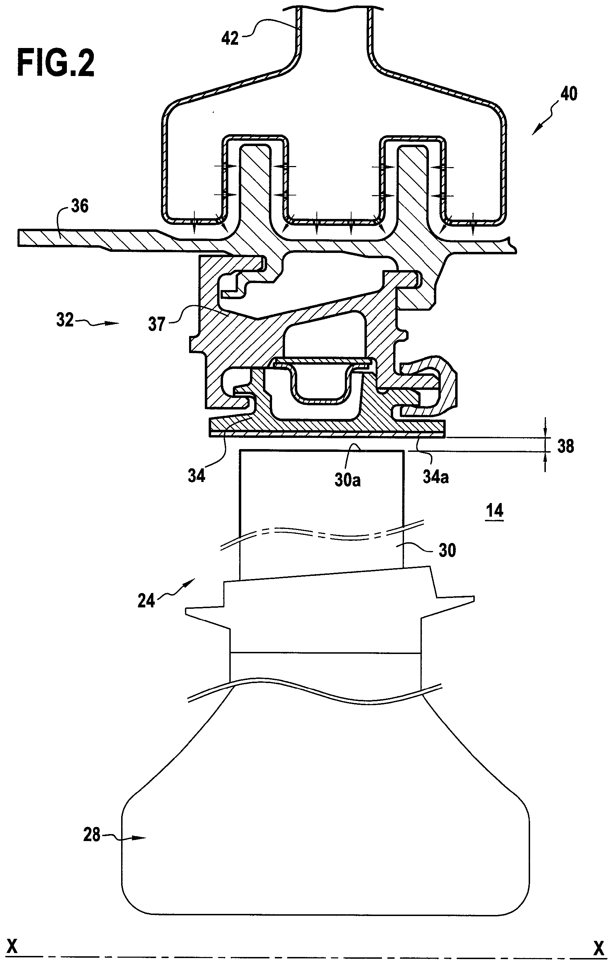

Comme représenté plus précisément par la **figure 2,** la turbine haute-pression 24 du turboréacteur comprend un rotor formé d'un disque 28 sur lequel sont montées une pluralité d'aubes 30 mobiles disposées dans la veine d'écoulement du flux primaire 14. Le rotor est entouré par un carter de turbine 32 comprenant un anneau de turbine 34 porté par un carter externe de turbine 36 par l'intermédiaire d'entretoises de fixation 37.

L'anneau de turbine 34 peut être formé d'une pluralité de secteurs ou segment adjacents. Du côté interne, il est muni d'une couche 34a de matériau abradable et entoure les aubes 30 du rotor en ménageant avec les sommets 30a de celles-ci un jeu 38.

Conformément à l'invention, il est prévu un système permettant de piloter le jeu 38 en modifiant, de manière commandée, le diamètre interne du carter externe de turbine 36. A cet effet, une unité de commande 46 commande le débit et/ou la température de l'air dirigé vers le carter externe de turbine 36, en fonction d'une estimation du jeu 38 et d'une consigne de jeu. L'unité de commande 46 est par exemple le système de régulation pleine autorité (ou FADEC) du turboréacteur 10.

A cet effet, dans l'exemple représenté, un boîtier de pilotage 40 est disposé autour du carter externe de turbine 36. Ce boîtier reçoit de l'air frais au moyen d'un conduit d'air 42 s'ouvrant à son extrémité amont dans la veine d'écoulement du flux primaire au niveau de l'un des étages du compresseur haute-pression 20 (par exemple au moyen d'une écope connue en soi et non représentée sur les figures). L'air frais circulant dans le conduit d'air est déchargé sur le carter externe de turbine 36 (par exemple à l'aide d'une multiperforation des parois du boîtier de pilotage 40) provoquant un refroidissement de celui-ci et donc une diminution de son diamètre interne. Comme représenté sur la figure 1, une vanne 44 est disposée dans le conduit d'air 42. Cette vanne est commandée par l'unité de commande 46.

Bien entendu, l'invention n'est pas limitée à ce type particulier de pilotage des dimensions du carter. Ainsi, un autre exemple non représenté consiste à prélever de l'air au niveau de deux étages différents du compresseur et de moduler le débit de chacun de ces prélèvements pour régler la température du mélange à diriger sur le carter externe de turbine 36.

On décrit maintenant la détermination d'une estimation du jeu 38, notée J, par l'unité de commande 46.

De manière connue, l'unité de commande 46 obtient des signaux de mesure provenant de différents capteurs agencés dans le turboréacteur 10, et en particulier :

- la température extérieure T12, et
- la température T495 mesurée par un capteur de température 1 destiné à mesurer la température dans la veine d'écoulement de flux primaire 14, au niveau de la turbine basse-pression 26.

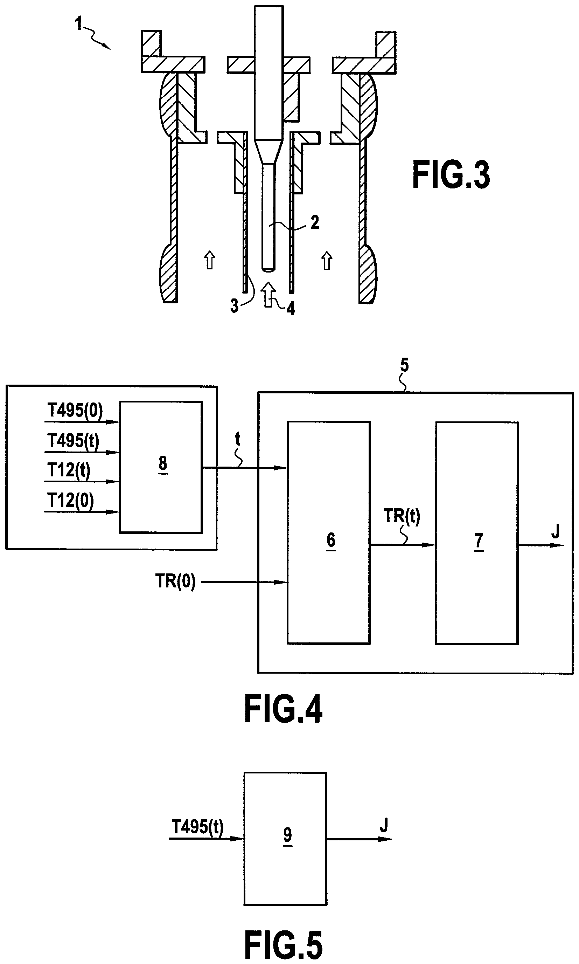

La **figure 3** représente, de manière schématique, le capteur de température 1 permettant de mesurer la température T495. Le capteur de température 1 comprend un élément sensible 2 situé dans un espace libre 3 traversé, en fonctionnement, par un flux d'air symbolisé par une flèche 4.

Le fonctionnement d'un tel capteur est connu de l'homme du métier et ne sera pas décrit en détail. Il suffit de rappeler que ce type de capteur fonctionne par aspiration à partir d'un certain écart de pression entre l'amont et l'aval. Idéalement, le capteur de température 1 fonctionne en mode sonique, pour un rapport de pression donné, afin de garantir un débit constant au niveau de l'élément sensible 2. Ainsi, à partir du régime de ralenti au sol, la température T495 mesurée par l'élément sensible 2 du capteur de température 1 est donc la température du flux d'air.

Toutefois, pour des régimes moteurs en dessous du régime de ralenti au sol ou à l'arrêt du moteur, aucun flux d'air ne traverse l'espace libre 3. Ainsi, dans ce cas, la température T495 mesurée par l'élément sensible 2 du capteur de température 1 est la température de son environnement, mesurée par rayonnement.

Les inventeurs ont constaté que l'évolution de la température T495 pendant l'arrêt du moteur au sol était reproductible et déterministe. Cette constatation est utilisée pour estimer le jeu 38 lors du démarrage du turboréacteur 10.

Plus précisément, les inventeurs ont étudié la grandeur $\Delta T(t)$ suivante :

$$\Delta T(t) = \frac{T495(t) - T12(t)}{T495(0) - T12(0)}$$

où t représente le temps, la référence t=0 correspondant à un temps de référence suivant l'arrêt du moteur, par exemple 150 secondes après l'arrêt du moteur.

Les inventeurs ont constaté que la grandeur $\Delta T(t)$ était modélisable de la manière suivante :

$$\Delta T(t) = \frac{1}{2} * (e^{-\frac{t}{\tau 1}} + e^{-\frac{t}{\tau 2}})$$

où $\tau 1$ et $\tau 2$ sont des constantes de temps.

Les constantes de temps $\tau 1$ et $\tau 2$ peuvent être déterminées empiriquement, à partir d'essais réalisés sur le turboréacteur 10 ou sur un ou plusieurs turboréacteurs de même type. La température initiale T495(0) peut être différente d'un essai à l'autre. Lors d'essais réalisés sur un moteur particulier, les inventeurs ont déterminés les constantes de temps suivantes : $\tau 1 = 758$ s et $\tau 2 = 5450$ s.

Connaissant la valeur des constantes de temps $\tau 1$ et $\tau 2$, il est alors possible de déterminer, lors du démarrage du moteur à un instant t, la durée d'arrêt du moteur, c'est-à-dire de déterminer la valeur de t, en fonction des températures T495(0), T12(0), T495(t) et T12(t). Les températures T495(0) et T12(0) peuvent être mémorisée par l'unité de commande 46 lors de l'arrêt du moteur.

La **figure 4** représente la détermination d'une estimation J du jeu 38 lors du démarrage du moteur, sous forme de modules fonctionnels. Ces modules fonctionnels correspondent par exemple à un programme d'ordinateur exécuté par l'unité de commande 46.

Sur la figure 4, un module de détermination 5 détermine l'estimation J en fonction de la durée d'arrêt du moteur, représentée par t, et de la température du rotor, notée TR, lors de l'arrêt du rotor : TR(0). Le module de détermination 5 comprend deux modules de modélisation 6 et 7.

Le module de modélisation 6 implémente un modèle thermique de l'évolution de la température du rotor TR en fonction du temps, et fournit donc une estimation de la température du rotor TR(t) en fonction de TR(0) et de t.

Le module de modélisation 7 implémente un modèle thermique du turboréacteur 10 et détermine l'estimation J du jeu 38 en fonction de la température TR(t).

La réalisation des modules de modélisation 6 et 7 fait partie des connaissances générales de l'homme du métier et ne sera donc pas décrite en détail. Par exemple, modèle thermique de l'évolution de la température du rotor TR en fonction du temps peut être un modèle de premier ordre avec une constante de temps de 8/3 d'heures.

Après le démarrage du moteur, par exemple en régime de croisière, un autre module de détermination (non représenté) est chargé de déterminer l'estimation du jeu 38. Cet autre module implique également de déterminer la température TR du rotor. La température TR déterminée par cet autre module de détermination lors de l'arrêt du moteur peut être mémorisée par l'unité de commande 46 et être utilisée par le module de détermination 5 comme donnée d'entrée pour la température TR(0).

La durée d'arrêt, représentée par le temps t, est déterminée par un module de modélisation 8 qui implémente un modèle de l'évolution de la température T495 pendant l'arrêt du moteur au sol, conformément aux équations précitées. Ainsi, le module de modélisation 8 détermine le temps t en fonction des températures T495(0), T12(0), T495(t) et T12(t).

Grâce au module de modélisation 8, il est possible de déterminer la durée d'arrêt du moteur sans nécessiter l'enregistrement de l'heure d'arrêt du moteur. On évite donc une opération d'enregistrement complexe. De plus, l'état thermique du moteur au démarrage, représenté ici par TR(t), peut être déterminé sans nécessiter de capteur de température de type thermocouple de masse.

Dans le schéma de la figure 4, une surestimation de la durée d'arrêt conduit à une sous-estimation de la température du rotor TR(t) au démarrage, et donc à une surestimation du jeu 38 au démarrage. Une surestimation du jeu 38 au démarrage se traduit par une surestimation du jeu 38 en cours de régulation, ce qui peut provoquer un contact et endommager les aubes 30.

La précision du jeu 38 étant de 0.03 mm, une surestimation du jeu 38 de 0.03mm est la limite acceptable. Dans le cadre de l'étude d'un moteur particulier et d'un mode de régulation particulier, les inventeurs ont déterminé une surestimation du jeu 38 de 0.03mm correspond à une sous-estimation de la température du rotor au démarrage TR(t) d'environ 60K.

Pour les modèles précités de l'évolution de la température du rotor TR et de l'évolution de la température T495 pendant l'arrêt du moteur au sol en fonction du temps, et les valeurs de constantes de temps précitées, cela correspond à une surestimation de 860 secondes (soit plus de 14 minutes) de la durée d'arrêt.

En comparant la durée d'arrêt réelle avec la durée d'arrêt estimée par le modèle de l'évolution de la température T495, les inventeurs ont constatés que le modèle de l'évolution de la température T495 permettait d'estimer la durée d'arrêt du moteur avec une précision suffisante.

La **figure 5** représente une manière alternative de déterminer une estimation J du jeu 38 lors du démarrage du moteur, en bénéficiant de la reproductibilité de l'évolution de la température T495 pendant l'arrêt du moteur au sol.

Dans cette variante, un module de détermination 9 implémente une table de correspondance, réalisées par exemple empiriquement à partir d'essais, qui fournit directement une estimation J du jeu 38 en fonction de la température T495(t).

L'invention a été décrite ci-dessus en référence à la température T495. Cependant, une autre température T peut être utilisée pour déterminer la durée d'arrêt du moteur et l'estimation J du jeu 38. En effet, le turboréacteur 10 comprend d'autres capteurs de température incluant un élément sensible situé un espace libre du turboréacteur et destiné à mesurer la température d'un flux d'air lors du fonctionnement du turboréacteur 10. A l'arrêt ou en dessous du régime de ralenti, si aucun flux d'air ne circule dans l'espace libre, l'élément sensible mesure la température T de son environnement. L'évolution de cette température T en fonction du temps lors de l'arrêt du modèle au sol peut être modélisée, de manière similaire à ce qui est décrit ci-dessus pour la température T495.

Le modèle de l'évolution de la température T495 décrit ci-dessus est normalisé par la température extérieure T12. En variante, une autre température reflétant les conditions extérieures peut être utilisée pour normaliser la température T495.

**Revendications**

1. Procédé de pilotage d'un jeu (38) entre, d'une part, des sommets d'aubes (30) d'un rotor de turbine d'un moteur d'avion à turbine à gaz et, d'autre part, un anneau de turbine (34) d'un carter (32) entourant les aubes, le procédé consistant à commander un débit et/ou une température d'air dirigé vers le carter (32) en fonction notamment d'une estimation (J) dudit jeu (38), ladite estimation (J) dudit jeu (38) étant déterminée en fonction d'un état thermique (TR(t)) du moteur d'avion, lors du démarrage, ledit état thermique (TR(t)) étant déterminé en fonction de la durée d'arrêt (t) au sol du moteur d'avion, **caractérisé en ce que** ladite durée d'arrêt (t) est déterminée en fonction d'une température (T495(t)) mesurée par un capteur de température (1) incluant un élément sensible (2) agencé dans un espace libre (3) du moteur d'avion et d'un modèle de l'évolution de ladite température en fonction du temps lors de l'arrêt du moteur d'avion au sol.

2. Procédé selon la revendication 1, dans lequel ledit capteur de température (1) est un capteur destiné à fonctionner par aspiration après le démarrage du moteur d'avion, afin de mesurer la température d'un flux d'air dans une veine (14) du moteur d'avion.

3. Procédé selon l'une des revendications 1 et 2, dans lequel ledit modèle de l'évolution de ladite température en fonction du temps lors du l'arrêt du moteur d'avion au sol est donnée par la formule suivante :

$$\Delta T(t) = \frac{1}{2} * (e^{-\frac{t}{\tau 1}} + e^{-\frac{t}{\tau 2}})$$

où $\tau 1$ et $\tau 2$ sont des constantes de temps déterminées empiriquement, à partir d'essais réalisés sur un ou plusieurs moteurs d'avion.

4. Unité de commande (46) destinée au pilotage d'un jeu (38) entre, d'une part, des sommets d'aubes (30) d'un rotor de turbine d'un moteur d'avion à turbine à gaz et, d'autre part, un anneau de turbine (34) d'un carter (32) entourant les aubes, ladite unité de commande comprenant un module de détermination et un module de commande (44) d'un débit et/ou d'une température d'air dirigé vers le carter (32) en fonction notamment d'une estimation (J) dudit jeu (38) déterminée dans le module de détermination (5) en fonction d'un état thermique (TR(t)) du moteur d'avion, lors du démarrage, ledit état thermique (TR(t)) étant lui-même déterminé en fonction de la durée d'arrêt (t) au sol du moteur d'avion, **caractérisé en ce que** qu'elle comprend en outre un module de modélisation (8 ; 9) configuré pour déterminer ladite durée d'arrêt (t), en fonction d'une température (T495(t)) mesurée par un capteur de température (1) incluant un élément sensible (2) agencé dans un espace libre (3) du moteur d'avion et d'un modèle de l'évolution de ladite température en fonction du temps lors de l'arrêt du moteur d'avion au sol.

5. Moteur d'avion comprenant unité de commande (46) selon la revendication 4 et un capteur de température (1) incluant un élément sensible (2) agencé dans un espace libre (3) du moteur d'avion, ledit capteur de température étant destiné à fonctionner par aspiration après le démarrage du moteur d'avion, afin de mesurer la température d'un flux d'air dans une veine (14) du moteur d'avion.

**Patentansprüche**

1. Verfahren zur Steuerung eines Spiels (38) zwischen einerseits Spitzen von Schaufeln (30) eines Turbinenrotors eines Gasturbinenflugzeugtriebwerks und andererseits einem Turbinenring (34) eines die Schaufeln umgebenden Gehäuses (32), wobei das Verfahren darin besteht, einen Durchsatz und/oder eine Temperatur von zu dem Gehäuse (32) gerichteter Luft in Abhängigkeit insbesondere einer Schätzung (J) des Spiels (38) zu steuern, wobei die Schätzung (J) des Spiels (38) in Abhängigkeit von einem thermischen Zustand (TR(t)) des Flugzeugtriebwerks beim Starten bestimmt wird, wobei der thermische Zustand (TR(t)) in Abhängigkeit von der Stillstandsdauer (t) des Flugzeugtriebwerks am Boden bestimmt wird, **dadurch gekennzeichnet, dass** die Stillstandsdauer (t) in Abhängigkeit von einer Temperatur (T495(t)), die durch einen Temperatursensor (1), welcher einen in einem Freiraum (3) des Flugzeugtriebwerks angeordneten Fühler (2) einschließt, gemessen wird, und von einem Modell der Entwicklung der Temperatur über die Zeit während des Stillstands des Flugzeugtriebwerks am Boden bestimmt wird.

2. Verfahren nach Anspruch 1, bei dem der Temperatursensor (1) ein Sensor ist, welcher dazu bestimmt ist, nach dem Starten des Flugzeugtriebwerks durch Saugen zu arbeiten, um die Temperatur eines Luftstroms in einem Kanal (14) des Flugzeugtriebwerks zu messen.

3. Verfahren nach einem der Ansprüche 1 und 2, bei dem das Modell der Entwicklung der Temperatur über die Zeit während des Stillstands des Flugzeugtriebwerks am Boden durch die folgende Formel gegeben ist:

$$\Delta T(t) = \frac{1}{2} * (e^{-\frac{t}{\tau 1}} + e^{-\frac{t}{\tau 2}})$$

worin $\tau 1$ und $\tau 2$ Zeitkonstanten sind, die anhand von an einem oder mehreren Flugzeugtriebwerken durchgeführten Versuchen empirisch bestimmt werden.

4. Steuerungseinheit (46), die zur Steuerung eines Spiels (38) zwischen einerseits Spitzen von Schaufeln (30) eines Turbinenrotors eines Gasturbinenflugzeugtriebwerks und andererseits einem Turbinenring (34) eines die Schaufeln umgebenden Gehäuses (32) bestimmt ist, wobei die Steuerungseinheit ein Bestimmungsmodul und ein Modul zur Steuerung (44) eines Durchsatzes und/oder einer Temperatur von zu dem Gehäuse (32) gerichteter Luft in Abhängigkeit insbesondere einer Schätzung (J) des Spiels (38), die in dem Bestimmungsmodul (5) in Abhängigkeit von einem thermischen Zustand (TR(t)) des Flugzeugtriebwerks beim Starten bestimmt wird, umfasst, wobei der thermische Zustand (TR(t)) selbst in Abhängigkeit von der Stillstandsdauer (t) des Flugzeugtriebwerks am Boden bestimmt wird, **dadurch gekennzeichnet, dass** sie ferner ein Modellierungsmodul (8; 9) umfasst, das dazu ausgelegt ist, die Stillstandsdauer (t) in Abhängigkeit von einer Temperatur (T495(t)), die durch einen Temperatursensor (1), welcher einen in einem Freiraum (3) des Flugzeugtriebwerks angeordneten Fühler (2) einschließt, gemessen wird, und von einem Modell der Entwicklung der Temperatur über die Zeit während des Stillstands des Flugzeugtriebwerks am Boden zu bestimmen.

5. Flugzeugtriebwerk, umfassend eine Steuerungseinheit (46) nach Anspruch 4 und einen Temperatursensor (1), welcher einen in einem Freiraum (3) des Flugzeugtriebwerks angeordneten Fühler (2) einschließt, wobei der Temperatursensor dazu bestimmt ist, nach dem Starten des Flugzeugtriebwerks durch Saugen zu arbeiten, um die Temperatur eines Luftstroms in einem Kanal (14) des Flugzeugtriebwerks zu messen.

## Claims

1. A method for controlling clearance (38) between the tips of blades (30) of a turbine rotor of a gas turbine aircraft engine on the one hand and a ring-shaped turbine shroud (34) of a housing (32) surrounding the blades on the other hand, the method consisting of controlling a flow rate and/or a temperature of air directed towards the housing (32) notably according to an estimation (J) of said clearance (38), said estimation (J) of the said clearance (38) being determined according to a thermal state (TR(t)) of the aircraft engine upon starting, said thermal state (TR(t)) being determined according to a stoppage period (t) of the aircraft engine on the ground, **characterized in that** said stoppage period (t) is determined according to a temperature (T495(t)) measured by a temperature sensor (1) including a sensitive element (2) laid out in a free space (3) of the aircraft engine and to a model of the time-dependent change of said temperature over time during the standstill of the aircraft engine on the ground.

2. The method according to claim 1, wherein said temperature sensor (1) is a sensor intended to operate by suction after the starting of the aircraft engine, in order to measure the temperature of an airflow in a vein (14) of the aircraft engine.

3. The method according to one of claims 1 and 2, wherein said model of the time-dependent change of said temperature over time during the standstill of the aircraft engine on the ground is given by the following formula:

$$\Delta T(t) = 1/2(e^{-t/\zeta 1} + e^{-t/\zeta 2})$$

Where $\zeta 1$ and $\zeta 2$ are time constants determined empirically from tests on one or more aircraft engines.

4. A control unit (46) intended for controlling clearance (38) between the tips of blades (30) of a turbine rotor of a gas turbine aircraft engine on the one hand and a ring-shaped turbine shroud (34) of a housing (32) surrounding the blades on the other hand, said control unit comprising a determination module (5) and a module (44) for controlling a flow rate and/or a temperature of air directed towards the housing (32) notably according to an estimation (J) of said clearance (38) determined in the determination module according to a thermal state (TR(t)) of the aircraft engine upon starting, said thermal state (TR(t)) being determined according to a stoppage period (t) of the aircraft engine on the ground, **characterized in that** it further comprises a modelling module (8 ; 9) configured for determining said stoppage period (t), according to a temperature (T495(t)) measured by a temperature sensor (1) including a sensitive element (2) laid out in a free space (3) of the aircraft engine and to a model of the time-dependent change of said temperature over time during the standstill of the aircraft engine on the ground.

5. An aircraft engine comprising a control unit (46) according to claim 4 and a temperature sensor (1) including a sensitive element (2) laid out in a free space (3) of the aircraft engine, said temperature sensor being intended to operate by suction upon starting the aircraft engine, in order to measure temperature of an airflow in a vein (14) of the aircraft engine.

FIG.1

**FIG.2**

42

40

36

32

37

34

30a

34a

38

14

30

24

28

X — — — — — — — — — — — — — — X

**FIG.3**

**FIG.4**

**FIG.5**

**EP 2 673 476 B1**

## RÉFÉRENCES CITÉES DANS LA DESCRIPTION

### Documents brevets cités dans la description

- US 6487491 B
- US 7584618 B